(19) Europäisches Patentamt
European Patent Office
Office européen des brevets

(11) **EP 2 738 534 A2**

(12) **EUROPEAN PATENT APPLICATION**

(43) Date of publication:
**04.06.2014 Bulletin 2014/23**

(51) Int Cl.:
***G01L 5/28*** *(2006.01)*     ***G01M 17/04*** *(2006.01)*

(21) Application number: **13182156.3**

(22) Date of filing: **29.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.11.2012 ES 201231845**

(71) Applicant: **Técnicas Reunidas de Automocion, S.A.**
**09001 Burgos (ES)**

(72) Inventors:
• **Medina González, Francisco Javier**
**09001 BURGOS (ES)**

• **Martín González, Abraham**
**09001 BURGOS (ES)**
• **Guimarey Álvarez, Pablo**
**09001 BURGOS (ES)**
• **Pérez Rodríguez, Celestino**
**09001 BURGOS (ES)**
• **Pavón Baena, Fernando**
**09001 BURGOS (ES)**
• **Rodríguez López, José Adriano**
**09001 BURGOS (ES)**

(74) Representative: **Ungria López, Javier**
**Avda. Ramón y Cajal, 78**
**28043 Madrid (ES)**

(54) **MACHINE FOR CHECKING SUSPENSION AND BRAKES IN LIGHT-WEIGHT VEHICLES**

(57) Machine (1) for checking suspension and brakes in light-weight vehicles, which adjusts to various wheelbase of said light-weight vehicles, said machine (1) comprising a fixed bedplate (2), a mobile bedplate (3) and a base structure (4), such that each bedplate (2, 3) comprises a bench for suspension check-ups (9) and a brake meter (10), such that the mobile bedplate (3) is displaced along the base structure (4) separating it from or bringing it closer to the fixed bedplate (2), in such a way that it adjusts to the various wheelbase in the light-weight vehicles.

FIG. 1

EP 2 738 534 A2

## Description

### Object of the invention

The present invention refers to a new machine for Ministry of Transport (MOT) test stations, in the field of light-weight vehicles, wherein the suspension is checked in the two axles of the vehicles at the same time, in addition to simultaneously checking the brake system in both axles.

### Technical problem to be solved and background of the invention

In MOT test stations, a series of actions are performed, designed to check the condition of each vehicle, in terms of the various systems from which it is composed.

Therefore, in MOT test stations, various checks are carried out to determine the condition of the vehicle, including checks on:

- The condition of the vehicle chassis bodywork
- The condition of the lights and signals
- The condition of the steering
- The condition of the engine and the level of pollution produced by the same
- The condition of the vehicle axles and suspension
- The condition of the brake system.

MOT test stations are divided into lines of work, all of the checks set out above being carried out in each line.

It is routine for all of these checks to be performed at the MOT test station, a long time being spent on each check, which despite being carried out automatically, limits the number of vehicles that can be accepted into each line in an MOT test station and as a result, the number of vehicles accepted into the MOT test station itself.

Checks on the vehicle's suspension and brake system are carried out axle by axle, one single piece of equipment being used in each vehicle check.

These checks are carried out as follows:

- In order to check the suspension, the vehicle's front axle is firstly placed on the piece of equipment for checking suspension. The front axle is checked and the vehicle's rear axle is subsequently placed on the piece of checking equipment, before checking the suspension in the rear axle.
- The vehicle's brake system is subsequently checked in a similar way, firstly fitting the front axle to a piece of brake equipment, in order to check the brake system in the front axle, right after placing the rear axle on the same piece of brake equipment and checking the rear axle.

Having to perform checks on the two axles separately, in both the suspension and when checking the brake system, results in a lot of time being spent on these two checks.

A multitude of devices which serve to check suspension and the brake system separately, axle by axle, exist. Indeed, the fact that the two checks are carried out such a way, axle by axle, means that the vehicle must be moved three times, in addition to it initially being moved to position the first axle on the piece of suspension checking equipment.

Document US 5,467,646 A discloses a device and process for controlling braking in four wheel drive vehicles.

In order to save time when checking the suspension and the brake system, the invention puts forward a system in which suspension is checked in the front and rear axles simultaneously, followed by the brake system of both axles, which is also checked just once, thus meaning that the position of the vehicle must only be altered once within the MOT test station, i.e. when the vehicle passes from the piece of suspension checking equipment to the piece of equipment for checking the brake system.

Likewise, document US 5,101,660 A discloses a method and an apparatus which serve to allow two or for wheel drive vehicles to be tested under simulated tread conditions.

The major limitation posed when installing the vehicle's two axles in the facility in which they are checked at the same time, is that it is difficult to successfully adjust the facility to all light-weight vehicles, given the various wheelbase which exist between all of them.

### Description of the invention

The invention consists of a new machine for MOT test stations, wherein the suspension and brake system of the vehicle's two axles may be checked just once, thereby reducing the time spent carrying out the MOT test on each vehicle.

The machine for checking suspension and brakes in light-weight vehicles adjusts to various wheelbase in said light-weight vehicles. Said machine comprises a fixed bedplate, a mobile bedplate and a base structure.

In the machine, each bedplate comprises a bench for suspension check-ups and a brake meter, in such a way that the mobile bedplate is displaced along the base structure, thus separating it from or bringing it closer to the fixed bedplate, in such a way that it adjusts to the various wheelbase in the light-weight vehicles.

The base structure of the machine for checking suspension and brakes in light-weight vehicles comprises an external, rectangular parallelepiped structure, which gives the base structure a box like form. It also comprises supports internal to the parallelepiped, upon which the machine's fixed bedplate is supported, in addition to longitudinal crossbars, internal to the external structure, a crosspiece which is perpendicular to the supports, lateral supports located in the upper portion of the external structure and flat metal pieces located on the lateral supports.

In addition to the bench for suspension check-ups and the brake meter, the fixed bedplate in the machine for checking suspension and brakes in light-weight vehicles furthermore comprises a horizontal platform. The fixed bedplate is joined to the supports in the base structure by means of metallic supports located at the end of the horizontal platform.

In addition to the bench for suspension check-ups and the brake meter, the mobile bedplate in the machine for checking suspension and brakes in light-weight vehicles furthermore comprises a base beam, a central area, at least one mobile input platform before the central area and at least one mobile output platform after the central area, said mobile platforms being joined to said central area.

Ball nuts are mounted in the base beam, the bench for suspension check-ups and the brake meter being built into the central area and said central area being supported by lower beams, said lower beams having built in guide shoes, which are displaced along the longitudinal crossbars in the base structure.

The at least one mobile input platform is displaced on the horizontal platform of the fixed bedplate, adjusting the distance between the two bedplates to the various wheelbase in vehicles undergoing testing. The at least one mobile output platform is displaced on the output platform of the base structure, one thereby overlapping the other, in such a way that the entirety of the tread surface or assembly of platforms in the machine is covered.

The machine for checking suspension and brakes in light-weight vehicles comprises a retention system, this retention system comprising an axle upon which two retention rollers are installed, which may rotate freely on said axle, each end of said axle being joined to an arm, which ensures the positioning of the retention rollers, said retention system thus preventing the vehicle from exiting during brake checks. The rollers serve a dual purpose of both making the test safe and holding the vehicle in place, thus preventing the brake test from ending prematurely because the vehicle has come out of the brake test equipment.

The machine for checking suspension and brakes in light-weight vehicles comprises a traction assembly, comprising a displacement beam, mounted to the longitudinal crossbars in the base structure, said displacement beam being fixed to one end of said longitudinal crossbars.

A traction motor is mounted to the displacement beam in the traction assembly, said motor being coupled to spindles by means of straps, these spindles in turn being threaded on the ball nuts mounted to the base beam in the mobile bedplate.

Each brake meter in the machine for checking suspension and brakes in light-weight vehicles is formed by a front roller and a rear roller, the diameter of the front roller being lesser than that of the rear roller.

Each brake meter in the machine comprises an elevation beam located between the two rollers in the brake meter, said elevation beam elevating the light-weight vehicle located on the rollers, thus making it possible for said vehicle to exit the brake meter.

In the machine for checking suspension and brakes in light-weight vehicles, the internal supports of the base structure are formed by metal profiles.

**Description of the drawings**

In order to complete the description, with the aim of facilitating a better understanding of the invention features, the present specification is accompanied by a set of drawings, which form an integral part of the same and provide a non-limiting example thereof:

Figure 1 is a perspective view of the machine, object of the installed invention.

Figure 2 is a perspective view of the base structure.

Figure 3 is a perspective view of the fixed bedplate.

Figure 4 is a perspective view of the mobile bedplate.

Figure 5 is a perspective view of the traction assembly.

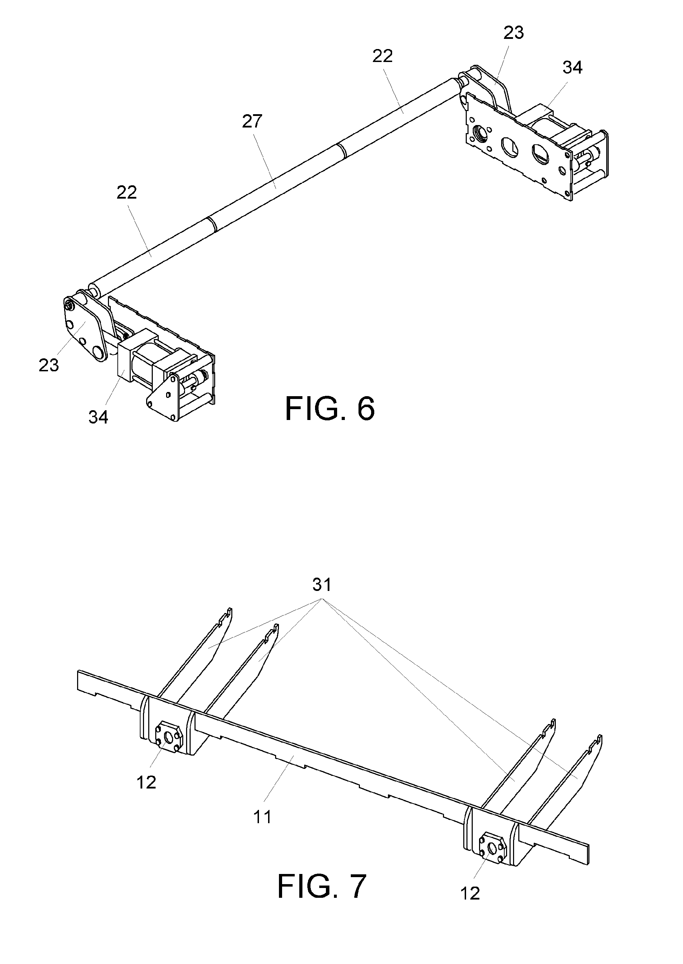

Figure 6 is a perspective view of the retention system.

Figure 7 is a perspective view of the base beam in the mobile bedplate.

Figure 8 is a cross section of the brake meter, representing the forces that develop in said brake meter.

The reference numbers represented in the figures represent the following elements:

1.- Machine
2.- Fixed bedplate
3.- Mobile bedplate
4.- Base structure
5.- Supports
6.- Longitudinal crossbeam
7.- Lateral supports
8.- Flat metal pieces
9.- Bench for suspension check-ups
10.- Brake meter
11.- Base beam
12.- Ball nuts
13.- Central area
14.- Lower beams

15.- Guide shoes
16e.- Mobile input platform
16s.- Mobile output platform
17.- Traction assembly
18.- Displacement beam
19.- Traction motor
20.- Spindles
21.- Straps
22.- Retention rollers
23.- Arm
24.- Front roller
25.- Rear roller
26.- Crosspiece
27.- Axle
28.- External structure
29.- Horizontal platform
30.- Metal support
31.- Extensions
32.- Output platform
33.- Elevation beam
34.- Pneumatic cylinder
$R$.- Radius of large roller
$r$.- Radius of small roller
$R_p$.- Radius of the crown of the large roller
$r_p$.- Radius of the crown of the small roller
$F$.- Force appearing on the periphery of the large roller
$f$.- Force appearing on the periphery of the small roller
$F_f$.- Brake force of the vehicle's wheel
$M$.- Motor torque applied to the small roller
$W$.- Angular velocity of the large roller
$w$.- Angular velocity of the small roller
$V$.- Peripheral velocity in the large roller
$v$.- Peripheral velocity in the small roller

**Description of a preferred embodiment**

The object of the present invention is a new machine for Ministry of Transport (MOT) tests, wherein suspension is checked in the two axles at the same time, as is the case of the brake system, which is also tested (measuring a brake force) simultaneously in the two axles.

Being able to perform checks in both axles at the same time reduces the time spent carrying out the inspection of each vehicle, thereby increasing capacity in each line within the MOT test station.

In order to respond to the need to perform MOT suspension and brake system checks in the two axles at the same time, it is necessary to develop a system which makes possible to adjust the facility to various wheelbase, appearing in the various vehicle models currently in circulation.

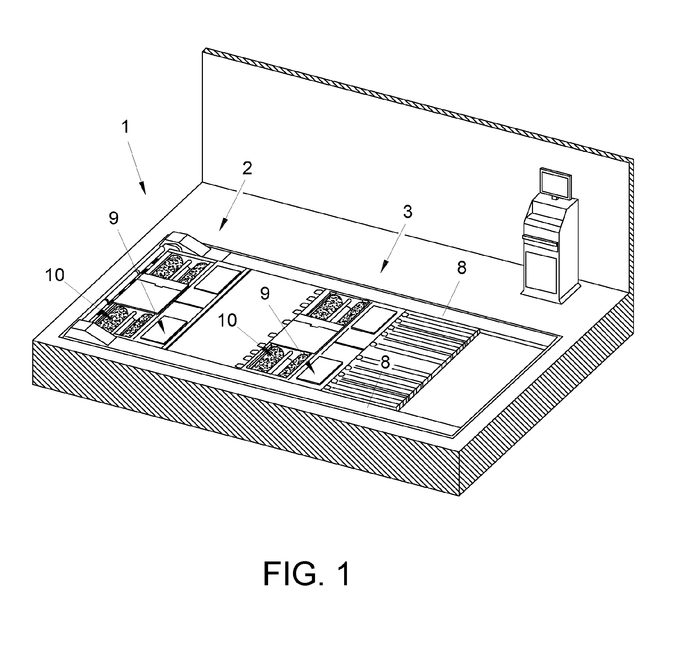

In the present descriptive specification, the input area and input direction are considered to be the area on the left in figure 1 and the output area and output direction are considered to be the area on the right in figure 1, showing the direction in which a vehicle would drive on the machine, object of the present invention.

The machine (1), object of the present invention (as can be seen in figure 1) comprises a fixed bedplate (2) and a mobile bedplate (3), the mobile bedplate (3) being displaced in order to adjust the machine (1) to the differences in wheelbase in the vehicles passing through this machine (1).

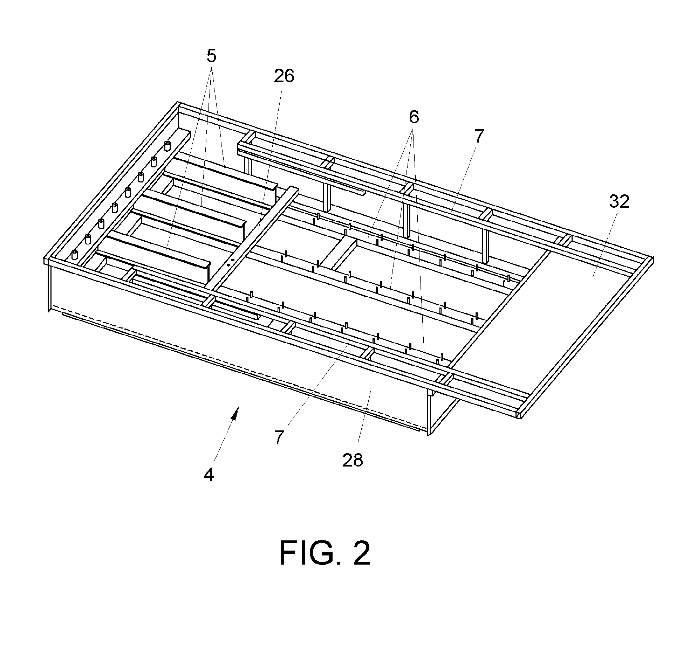

The machine (1), object of the present invention, also comprises a base structure (4) which, in one example embodiment, is obtained by means of welding commercial profiles and fine sheeting (as can be seen in figure 2).

The base structure (4) comprises:

-     An external structure (28), rectangular parallelepiped shaped, which gives the base structure (4) a box like shape.
-     Supports (5) internal to the parallelepiped, formed by "I" section profiles in the preferred embodiment of the machine (1), upon which the fixed bedplate (2) of the machine (1) is supported.
-     Longitudinal crossbars (6) inside the external structure (28), located in a longitudinal position, upon which the mobile bedplate (3) in the machine (1) is supported and displaced.
-     A crosspiece (26) positioned in such a way that it is perpendicular to the supports (5) and on the longitudinal crossbars (6).
-     Lateral supports (7) located in the upper portion of the base structure (4).
-     Flat metal pieces (8) supported on the lateral supports (7), said flat metal pieces (4) covering the sides of the base structure (4).
-     An output platform (32).

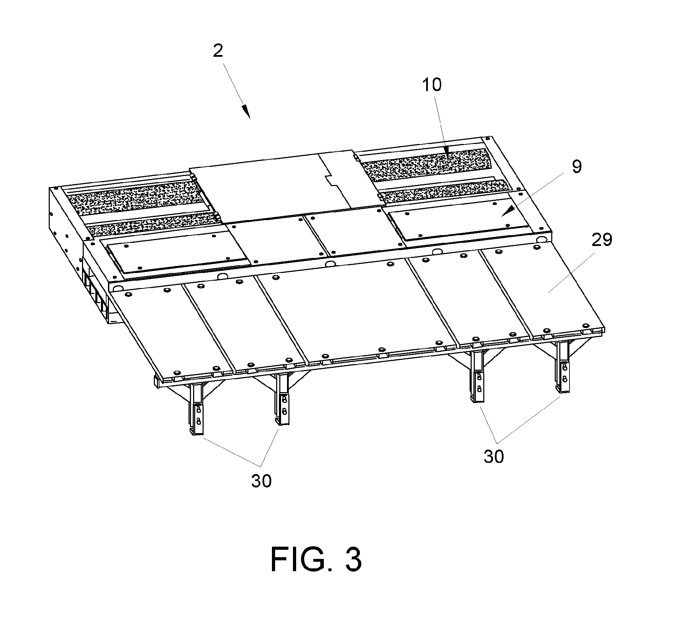

The fixed bedplate (2) of the machine (1) (as can be seen in figure 3) comprises a first bench for suspension check-ups (9), a first brake meter (10) and a horizontal platform (29), which is welded to the output face of the bench for suspension check-ups (9). The fixed bedplate (2) is joined to the crosspiece (26) in the base structure (4), by means of metal supports (30), located at the end of the horizontal platform (29).

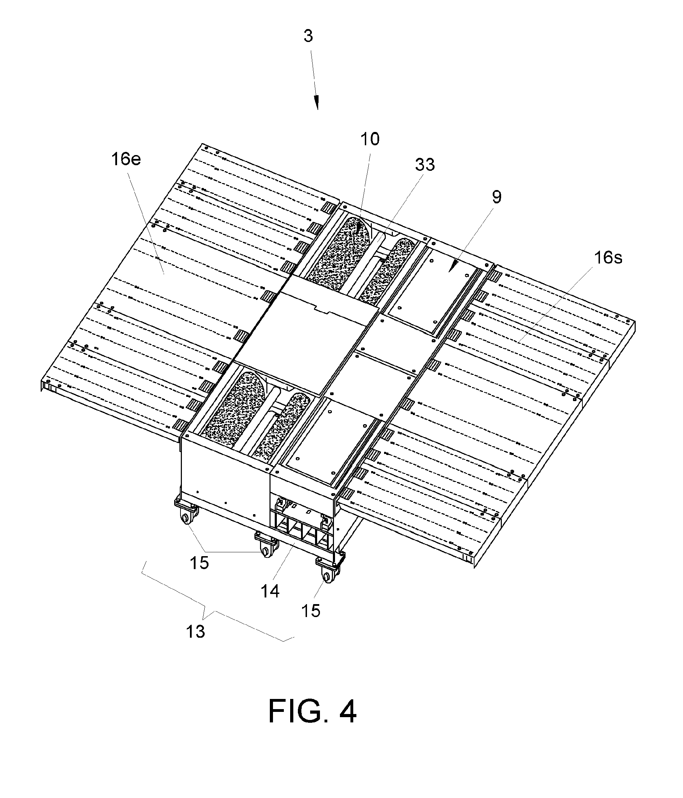

The mobile bedplate (3) of the machine (1) (as can be seen in figure 4) comprises a second bench for suspension check-ups (9) and a second brake meter (10) for checking the brake system.

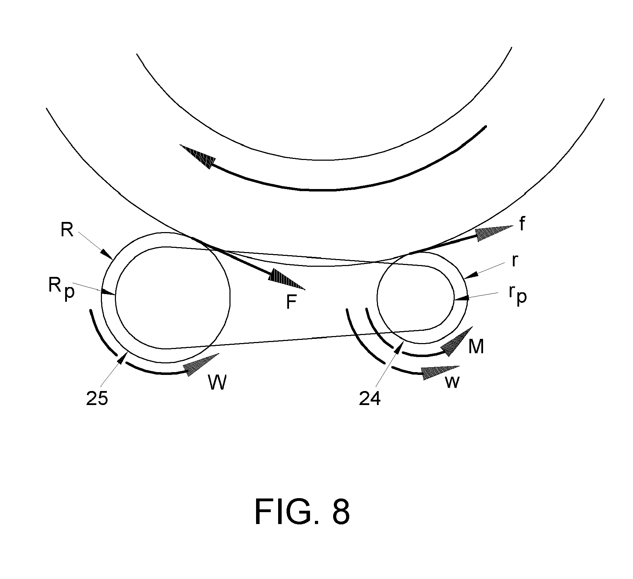

The second bench for suspension check-ups (9) and the second brake meter (10) form the central area (13) of the mobile bedplate (3) which is supported by lower beams (14) that in turn have built in guide shoes (15), the guide shoes (15) are displaced along the longitudinal crossbars (6) of the base structure (4). The mobile bedplate (3) comprises a base beam (11) (as can be seen in figure 8), onto which the ball nuts (12) are mounted. Likewise, the base beam (11) comprises extensions (31) which are perpendicular to said base beam (11), which are located below the central area (13) of the mobile bedplate (3).

According to the direction in which a vehicle is driving in the machine, a mobile input platform (16e) is located in front of the central area (13) and a mobile output platform (16s) is located behind said central area, the two mobile platforms (16e, 16s) being displaced along with the central area (13). The mobile input platform (16e) runs along the horizontal platform (29) of the fixed bedplate (2) and the mobile output platform (16s) runs along the output platform (32). The length of the mobile platforms (16e, 16s), of the horizontal platform (29) and of the output platform (32) alike, is such that when the mobile bedplate (3) is displaced, the various wheelbase in all vehicle models currently in circulation are covered.

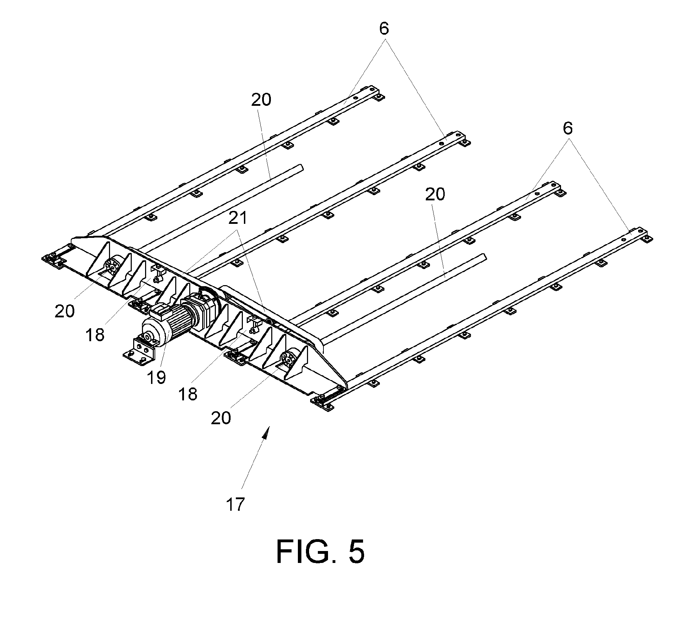

The mobile bedplate (3) is displaced using a traction assembly (17). The traction assembly (17) (as can be seen in figure 5) comprises a displacement beam (18), upon which a traction motor (19) is mounted. Said traction motor (19) is coupled to spindles (20) by means of straps (21) and these spindles (20) are in turn threaded on the ball nuts (12) mounted in the base beam (11) of the mobile bedplate (3). The displacement beam (18) of the traction assembly (17) is mounted to the longitudinal crossbars (6) in the base structure (4), being fixed at one end of said longitudinal crossbars (6).

All of the elements which form part of the various components in the machine (1) are welded with templates, in such a way that the position and orientation of said elements is appropriate.

In the brake test, when checking the brakes in the vehicle's two axles at the same time, said vehicle tends to come out of position on the brake meters (1). The machine (1) comprises a retention system which prevents the vehicle from coming out during the test. Said retention system comprises an axle (27), which in turn comprises two retention rollers (22) mounted to said axle (27), these retention rollers (22) being those which are in contact with the vehicle's rear tire. The axle (27) is joined at each end to an arm (23), which is driven by a pneumatic cylinder (34), which ensures the position of the axle (27) against the vehicle's tires.

A brake meter (10) comprises a front roller (24) and a rear roller (25) (being named as such in accordance with the direction of travel of the vehicle undergoing the test) upon which the vehicle's tires turn. One of these rollers (24, 25) is coupled to a motor which provides it with the movement needed to be able to carry out the brake test.

Each brake meter (10) comprises an elevation beam (33), located between the front roller (24) and the rear roller (25), said elevation beam (33) serving the purpose of working with the vehicle at the output of the brake test, positioning the vehicle's tread at the height of the rest of the components in the machine (1), given that when the vehicle is located over the brake meters (10), despite said brake meters (10) being locked, the feel of the vehicle driving on the brake meters (10) causes the driver to feel uneasy, at the output of the machine (1), which is prevented by means of these elevation beams (33). Said elevation beams (33) are moved by means of pneumatic drives.

In the brake meters (10) pertaining to the state of the art, the two rollers (24, 25) are equal in radius, whilst in the brake meter rollers (10) in the machine (1) object of the present invention, the radius of the front roller (24) has been modified. This modification has been made given the brake measurements taken by the brake meters (10) in the machine (1) object of the invention, which differ from the brake measurements obtained in machines (1) with just one brake meter (10). The radius of said front roller (24) has been reduced, this reduction in radius being brought about for two reasons:

- Firstly, the wheelbase between the rollers (24, 25) is maintained, the roller (24, 25) generators in contact with the vehicle's tire being moved further away when the front roller (24), which is lesser in diameter, is placed. In other words the tire is placed below the traditional brake meter (10), which enables an improvement in measurements of the brakes effectiveness to be obtained.
- Secondly, it also enables the generator in contact with the rear roller tire (25) to be lifted slightly from the front roller generator (24), thus equally resulting in an improvement in measurements of the brakes effectiveness being obtained.

Below is a mathematical formula based on figure 8, which demonstrates that brake force does not depend on the difference in diameter between the rollers (24, 25) which form part of the brake meters (10) in the machine (1), object of the present invention.

The brake force module would be equal to the sum of the reaction modules in both rollers.

$$\left|\vec{F}_f\right| = \left|\vec{F}_1\right| + \left|\vec{F}_2\right|$$

Analysing the intervening momentum or torque of a force, the following is ob tained:

$$M = F\frac{R \cdot r_p}{R_p} + f \cdot r$$

The above equation is divided by r.

$$\frac{M}{r} = F\frac{R \cdot r_p}{r \cdot R_p} + f \rightarrow (a)$$

On the other hand, when the peripheral velocity is equalled in the rollers, the following is obtained:

$$V = v$$

V and v being:

$$V = W \cdot R$$

$$v = w \cdot r$$

By applying the same equality in peripheral velocity of the nominal radii to the crowns, the following is obtained, given that they are joined together by means of a chain:

$$w \cdot r_p = W \cdot R_p \Rightarrow W = w \frac{r_p}{R_p}$$

When this W relationship is introduced into the V equation, we get:

$$V = W \cdot R = w \frac{r_p}{R_p} \cdot R$$

And equating it with v:

$$V = v \Rightarrow w \frac{r_p}{R_p} \cdot R = w \cdot r$$

It is simplified by w and reduced to:

$$\frac{r_p}{R_p} \cdot R = r \Rightarrow \frac{r_p}{R_p} \cdot \frac{R}{r} = 1$$

Taking this relationship into account and carrying it to the previous equation (a), we get:

$$\frac{M}{r} = F \frac{R \cdot r_p}{r \cdot R_p} + f = F + f$$

$$M = F_f \cdot r$$

This equation demonstrates that the brake force does not depend on the difference in diameter between the rollers (24, 25), given that the entire system may be simplified to one single roller (24, 25), of the diameter of the roller (24, 25) to which the motor is coupled.
Similarly if the development is made considering the motor coupled to the rear roller (25) (which is greater in diameter) the following would be obtained:

$$M = F_f \cdot R$$

The invention should not be limited to the specific embodiment described in this document. Experts in the field may develop other embodiments in view of the description formulated herein. The scope of the invention is thereby defined by the following claims.

**Claims**

1.  Machine (1) for checking suspension and brakes in light-weight vehicles, **characterised in that** the machine (1) adjusts to various wheelbase in said light-weight vehicles, comprising:

    - a fixed bedplate (2)
    - a mobile bedplate (3)
    - a base structure (4)
    such that each bedplate (2,3) comprises a bench for suspension check-ups (9) and a brake meter (10), in such a way that the mobile bedplate (3) is displaced along the base structure (4) being separated from or brought closer to the fixed bedplate (2), in such a way that it adjusts to the various wheelbase in light-weight vehicles.

2.  Machine (1) for checking suspension and brakes in light-weight vehicles, according to claim 1, **characterised in that** the base structure (4) comprises:

    - an external, rectangular parallelepiped structure (28), which gives the base structure (4) a box like form
    - supports (5) internal to the parallelepiped, upon which the fixed bedplate (2) in the machine (1) is supported

- longitudinal crossbars (6) internal to the external structure (28)
- a crosspiece (26) perpendicular to the supports (5)
- lateral supports (7) located in the upper portion of the external structure (28)
- flat metal pieces (8) located on the lateral supports (7)
- an output platform (32);

wherein the fixed bedplate (2) of the machine (1) is supported on the internal supports (5) of the base structure (4).

3. Machine (1) for checking suspension and brakes in light-weight vehicles, according to claims 1 and 2, **characterised in that** the fixed bedplate (2), in addition to the bench for suspension check-ups (9) and the brake meter (10), furthermore comprises a horizontal platform (29), said fixed bedplate (2) being joined to the supports (5) of the base structure (4) by means of metal supports (30) located at the end of the horizontal platform (29).

4. Machine (1) for checking suspension and brakes in light-weight vehicles, according to any of the previous claims, **characterised in that** the machine (1) comprises a retention system which comprises an axle (27), upon which two retention rollers (22) are installed, which may rotate freely on said axle (27), this axle (27) being joined at each end to an arm (23), which ensures the position of the retention rollers (22), said retention system thereby preventing the vehicle from exiting as the brakes are being tested.

5. Machine (1) for checking suspension and brakes in light-weight vehicles according to any of the previous claims, **characterised in that** the mobile bedplate (3) in the machine (1), in addition to the bench for suspension check-ups (9) and the brake meter (10), furthermore comprises:

- a base beam (11), to which ball nuts (12) are mounted
- a central area (13) into which the bench for suspension check-ups (9) and the brake meter (10) are built, said central zone (13) being supported by lower beams (14), which in turn have built-in guide shoes (15), which are displaced along the longitudinal crossbars (6) in the base structure (4)
- at least one mobile input platform (16e), welded to the central area (13)
- at least one mobile output platform (16s), welded to the central area (13);

such that the at least one mobile input platform (16e) is, according to the driving direction on the machine, located before the central area (13) and the at least one mobile output platform (16s) is located after the central area, the two mobile platforms (16e, 16s) being displaced, along with said central area (13).

6. Machine (1) for checking suspension and brakes in light-weight vehicles, according to any of the previous claims, **characterised in that** the at least one mobile input platform (16e) in the mobile bedplate (3) is displaced on the horizontal platform (29) of the fixed bedplate (2) and the at least one mobile output platform (16s) is displaced on the output platform (32) of the base structure (4).

7. Machine (1) for checking suspension and brakes in light-weight vehicles, according to any of the previous claims, **characterised in that** the machine (1) comprises a traction assembly (17), which comprises a displacement beam (18) mounted to the longitudinal crossbars (6) in the base structure (4), said displacement beam (18) being fixed to one end of said longitudinal crossbars (6).

8. Machine (1) for checking suspension and brakes in light-weight vehicles, according to any of the previous claims, **characterised in that** the traction assembly (17) comprises a displacement beam (18) to which a traction motor (19) is mounted, this traction motor (19) being coupled to spindles (20) by means of straps (21) and these spindles (20) in turn being threaded on the ball nuts (12) mounted to the base beam (11) of the mobile bedplate (3).

9. Machine (1) for checking suspension and brakes in light-weight vehicles, according to any of the previous claims, **characterised in that** the brake meters (10) comprise a front roller (24) and a rear roller (25), the front roller (25) being lesser in diameter than the rear roller (24).

10. Machine (1) for checking suspension and brakes in light-weight vehicles, according to any of the previous claims, **characterised in that** the brake meters (10) comprise an elevation beam (33) located between the two rollers (24, 25) of the brake meter (10), said elevation beam (33) elevating the light-weight vehicle located on the rollers (24, 25), thereby facilitating said vehicle exiting the brake meter (10).

11. Machine (1) for checking suspension and brakes in light-weight vehicles, according to any of the claims 2 to 9, **characterised in that** the internal supports (5) of the base structure (4) are formed by metal profiles.

EP 2 738 534 A2

FIG. 1

FIG. 2

FIG. 3

FIG. 4

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5467646 A
- US 5101660 A